# EUROPÄISCHE PATENTSCHRIFT

(11) **EP 0 570 997 B1**
(45) Veröffentlichungstag und Bekanntmachung des Hinweises auf die Patenterteilung: **27.09.1995**
(21) Anmeldenummer: 93112705.4
(22) Anmeldetag: 30.06.1989
(51) Int. Cl.: B29C 61/06, B29C 73/04, B32B 27/12

(54) **Verfahren zur Herstellung eines wärmerückstellbaren Bandes aus Kunststoff**
Process making a heat recoverable plastic band
Procédé de fabrication de bande thermorétractable en matière synthétique

(30) Priorität: 01.10.1988 DE 3833415
(43) Veröffentlichungstag der Anmeldung: 24.11.1993
(62) Teilanmeldung aus: 89111942.2
(73) Patentinhaber: kabelmetal electro GmbH, 30179 Hannover (DE)
(72) Erfinder: Marx, Karl-Heinz, D-30827 Garbsen (DE); Grajewski, Franz, Dr.-Ing., D-31655 Stadthagen (DE)

(56) Entgegenhaltungen:
- EP-A- 0 116 390
- EP-A- 0 273 224
- GB-A- 2 063 947
- US-A- 4 164 837

## Beschreibung

Die Erfindung betrifft ein Verfahren zur Herstellung eines wärmerückstellbaren Bandes aus Kunststoff, bei dem eine Matte aus in Längs- und Querrichtung des Bandes verlaufenden Strängen in einer Schicht aus Kunststoff eingebettet wird.

Zum Nachisolieren von Spleißstellen elektrischer Kabel bzw. Verbindungsstellen von Rohrleitungen sind Wickelmuffen bekanntgeworden, welche aus einem vernetzten Kunststoffband bestehen, welches gereckt wird, um es wärmerückstellbar zu machen. Solche Bänder werden um die Spleißstelle herumgelegt, an ihren in Längsrichtung verlaufenden Kanten verschlossen und z. B. mittels einer Propangasflamme erwärmt und auf die Spleißstelle heruntergeschrumpft. Eine auf der inneren Oberfläche des Bandes befindliche Kleberschicht erweicht beim Schrumpfen und dichtet die Spleißstelle gegen Feuchtigkeit ab. Diese Technik hat sich bewährt und ist Gegenstand des DE-PS 15 25 815. Die dort beschriebenen Muffen sind jedoch nicht beständig gegen Druck und sind empfindlich gegen Überhitzung, die z. B. beim unsachgemäßen Arbeiten mit der Propangasflamme auftreten kann. Auch können die Muffen bei Verletzung der Oberfläche einreißen. Insbesondere Nachrichtenkabel werden oft mit Innendruck betrieben, um das Eindringen von Feuchtigkeit zu vermeiden.

Um diese Nachteile zu vermeiden, wurde eine Umwickelmuffe entwickelt, die aus einem wärmerückstellbaren Gewebe besteht, welches in einer Kunststoffmatrix eingebettet ist. Das Gewebe besteht in einer bevorzugten Ausführungsform aus längsgereckten und somit wärmerückstellbaren Fäden, die mit nicht wärmerückstellbaren Fäden, z. B. aus Glasfaser verwebt sind.

Bei der Herstellung eines solchen Bandes wird bei einem Verfahren nach der EP-A-0 116 390 ein Gewebe aus vorgereckten in einer Richtung verlaufenden vernetzten Kunststoffäden und quer zu den Kunststoffäden verlaufenden Glasfäden hergestellt. Dieses Gewebe wird dann in einer Matrix aus Kunststoff eingebettet. Bei der Herstellung ist besonderes Augenmerk auf die Temperaturführung der Einbettungsmasse zu legen, da bei Überschreiten einer bestimmten Temperatur die gereckten Fäden schrumpfen. Ein anderer wesentlicher Nachteil ist, daß eine Verbindung der vernetzten Kunststoffäden mit der Einbettungsmasse schwierig herzustellen ist, da vernetzte Kunststoffe sich schlecht verkleben bzw. verschweißen lassen. Ein weiterer Nachteil ist darin zu sehen, daß die verstärkenden Fäden aus nicht wärmerückstellbarem Material nur in einer Richtung verlaufen. Ein gleiches Verfahren wird durch die EP-A-0 270 132 offenbart.

Nach einem anderen Vorschlag, der in der älteren deutschen Patentanmeldung P 38 06 660.2 beschrieben ist, wird ein Band aus einem Kunststoff extrudiert, vernetzt und gereckt und auf eine der Oberflächen ein Kunststoffband durch Kaschieren aufgebracht, in welchem ein Gewebe eingebettet ist. Um eine gute Haftung zwischen den Bändern zu erzielen, weist das vernetzte Band an seiner zu beschichtenden Oberfläche eine thermoplastische nicht vernetzte Schicht auf, die mit der vernetzten Schicht koextrudiert ist. Aufgrund der Koextrusion und anschließenden Vernetzung nur der einen Schicht läßt sich die das Gewebe enthaltende thermoplastische Schicht gut mit der unvernetzten Schicht des Bandes verbinden. Nachteilig ist auch hier, daß auf eine exakte Temperaturführung beim Kaschieren geachtet werden muß. Darüberhinaus erfordert die Herstellung einen hohen maschinellen Aufwand.

Es besteht daher seit langem ein Bedarf an einem Verfahren, wärmerückstellbare Bänder herzustellen, in deren Wandung ein die Festigkeit des Bandes erhöhendes Gewebe angeordnet ist, welches wie das für die Umwickelmuffe nach der DE-PS 15 25 815 geeignete Verfahren durchzuführen ist.

Der vorliegenden Erfindung liegt von daher die Aufgabe Zugrunde, das aus der EP-A-0 116 390 bzw. der EP-A-0 270 132 bekannte Verfahren dahingehend zu verbessern, daß auf eine aufwendige Temperaturführung verzichtet werden kann und bei dem ein wärmerückstellbares Band mit einem eingebetteten Gewebe aus sowohl in Reck- bzw. Schrumpfrichtung als auch senkrecht dazu verlaufenden Fäden aus einem bei Reck- bzw. Schrumpftemperatur nicht reckbarem, d. h. zugfestem Werkstoff erhalten wird.

Diese Aufgabe wird bei einem Verfahren der eingangs erwähnten Art dadurch gelöst, daß gemäß der Erfindung zunächst eine Matte oder ein Gewebe aus sich kreuzenden Strängen aus nicht oder nur geringfügig reckbarem Material geformt wird, wobei zumindest die in einer Richtung verlaufenden Stränge nach Art einer Wendel geformt sind, daß die Matte oder das Gewebe in einem Kunststoffmaterial eingebettet wird, daß das Kunststoffmaterial nach dem Einbettungsprozeß vernetzt, darauf erwärmt, und daß das so hergestellte Band in Richtung der in Form einer Wendel verlaufenden Stränge im erwärmten Zustand gereckt und im gereckten Zustand abgekühlt wird.

Der wesentliche Vorteil der Erfindung ist darin zu sehen, daß wie bei den Bändern nach der DE-PS 15 25 815 die Kunststoffmatrix wärmerückstellbar ist, und das Gewebe als verstärkende Schicht in der Kunststoffmatrix eingebettet ist. Das Gewebe selbst besitzt aufgrund des wendelförmigen Verlaufes der Stränge eine Dehnungsreserve, obwohl das Material der Stränge selbst nicht dehnbar ist, so daß das Band mit dem eingebetteten Gewebe auf die üblicherweise verwendeten Reckgrade von 400 % und mehr gereckt werden kann. Beim Recken vergrößert sich die Schlaglänge und der Durchmesser der Wendel verringert sich. Im Extremfall wird die Wendel zu einem gestreckten Strang verformt. Beim Erwärmen erweicht der Kunststoffstrang, auf den der Strang aufgewickelt ist und macht dann den Reckprozeß mit, wobei er den erforderlichen Bewegungsfreiraum für die Wendel hergibt. Beim nachfolgenden Schrumpfprozeß legt sich der Strang dann in einem unregelmäßigen Verlauf in die Kunststoffmatrix ein.

Mit besonderem Vorteil wird jeder der nach Art einer Wendel geformten Stränge auf einen Kunststoffstrang beliebigen Querschnitts wendelartig aufgewickelt. Dadurch läßt sich eine formstabile Matte bzw. ein formstabiles Gewebe herstellen, das von einer Vorratsspule ohne Verformung der Maschenweite abgezogen und der Einbettungsanlage zugeführt werden kann.

Das Einbetten der Matte oder des Gewebes in dem Kunststoffmaterial erfolgt durch Extrudieren, Kaschieren oder Laminieren. Wesentlich ist dabei, daß das Kunststoffmaterial in die Maschenzwischenräume eindringt, so daß ein einschichtiger bandförmiger Körper mit einer eingebetteten Verstärkungsschicht entsteht.

Der Kunststoffstrang, auf den der Strang wendelartig aufgewickelt ist, besteht vorzugsweise aus einem thermoplastischen unvernetzten Kunststoff. Dadurch ist sichergestellt, daß er sich mit dem ebenfalls im thermoplastischen unvernetzten Zustand befindlichen Kunststoffmaterial gut verbindet.

Eine besonders vorteilhafte Weiterbildung der Erfindung besteht darin, daß die Matte bzw. das Gewebe in einem kontinuierlichen Arbeitsgang mit einem silangepfropften Polyethylen durch Extrusion umspritzt wird, daß das silangepfropfte Polyethylen bei Gegenwart von Wasser oder Wasserdampf vernetzt wird, daß das vernetzte Band auf eine Temperatur oberhalb des Kristallitschmelzpunktes des Polyethylens erwärmt, bei dieser Temperatur um mindestens 40 % gereckt und im gereckten Zustand abgekühlt wird. Es versteht sich von selbst, daß auch andere Vernetzungsarten geeignet sind, wie z. B. die peroxidische Vernetzung oder auch die Strahlenvernetzung. Die besonders bevorzugte Vernetzungsart zeichnet sich jedoch durch einen geringen maschinellen Aufwand aus.

Zweckmäßigerweise wird eine nahezu endlose Matte aus Kett- und Schußfäden hergestellt, wobei die Kettfäden geradlinig verlaufende Fäden aus im wesentlichen nicht reckbarem Material sind und die Schußfäden aus einem thermoplastischen Kunststoffstrang mit einer wendelförmigen Umwicklung aus einem oder mehreren Fäden aus einem im wesentlichen nicht reckbarem Material bestehen, daß die Matte oder das Gewebe kontinuierlich in einem Kunststoffmaterial eingebettet wird, daß das Kunststoffmaterial vernetzt wird, daß Formlinge von dem Band abgetrennt und daß die Formlinge erwärmt, im erwärmten Zustand gereckt und im gereckten Zustand abgekühlt werden. Als Material für die nicht reckbaren Stränge bzw. Fäden kommen z. B. Baumwollfäden, Metallfäden, Glasfäden, die auch aus miteinander verzwirnten oder verseilten bzw. gefachten Einzelfäden aufgebaut sein können, in Frage. Auch können mehrere Fäden auf den Kunststoffstrang aufgewickelt werden, wobei auch eine Kombination der o.g. Materialen denkbar ist. Wird ein silangepfropftes Polyethylen als Kunststoffmatrix verwendet, ist zweckmäßigerweise als Träger für den Strang aus nicht reckfähigem Material ebenfalls ein Strang aus Polyethylen zu bevorzugen.

Nach einer weiteren vorteilhaften Ausgestaltung der Erfindung wird das Band im Querschnitt gesehen unterschiedlich starkt vernetzt, und zwar dergestalt, daß in den dem zu umhüllenden Gegenstand zugekehrten Wandungsbereichen ein höherer Vernetzungsgrad von z.B. 25 - 50 % und in den dem Gegenstand abgekehrten Wandungsbereichen ein geringerer Vernetzungsgrad von z.B. 5 - 25 % vorliegt. Da, wie durch Versuche ermittelt wurde, die Rißanfälligkeit mit steigendem Vernetzungsgrad zunimmt, ist das auf diese weise hergestellte Band weniger anfällig gegen Einreißen.

Das Band wird vorteilhafterweise durch Koextrusion von mindestens zwei Schichten hergestellt, wobei die Schichten aus unterschiedlich stark gepfropftem Polyethylen bestehen. Diese Vernetzung von Polyethylen durch Aufpfropfen von Silanen und anschließende Lagerung in feuchter Umgebung ist für dieses Verfahren besonders geeignet, da durch unterschiedlich hohe Zugaben an Vernetzugnsmitteln und/oder Katalysatoren mehrere Schichten mit unterschiedlich hohem Vernetzungsgrad hergestellt werden können, so daß das Band einen sandwichartigen Aufbau zeigt. Durch die Sandwichbauweise wird die Reißfestigkeit des Bandes gegenüber einem homogenen Band mit gleicher Wanddicke durch einen mechanischen Synergismuseffekt erheblich erhöht.

Wie bereits vorher erwähnt, ist es erforderlich, daß die dem Gewebe von beiden Seiten zugeführten Kunststoffschichten sich miteinander verbinden. Bei einer engen Maschenweite des Gewebes kann es hier u.U. zu Schwierigkeiten kommen, da dann das Kunststoffmaterial aufgrund seiner hohen Zähigkeit die Maschen nicht durchdringen kann. Dieses Problem wird dadurch gelöst, daß der oder die umwickelten Kunststoffstränge mit unterschiedlichem Abstand zueinander verwebt werden.So ist es beispielsweise möglich, z.B. zwei oder drei Kunststoffstränge mit relativ geringem Abstand zueinander und die nächste Gruppe aus zwei oder drei Kunststoffsträngen in einem größeren Abstand zu der vorherigen Gruppe zu verweben. Der Abstand zwischen den Gruppen ist so groß zu wählen, daß die Kunststoffschichten sich an dieser Stelle miteinander verbinden.

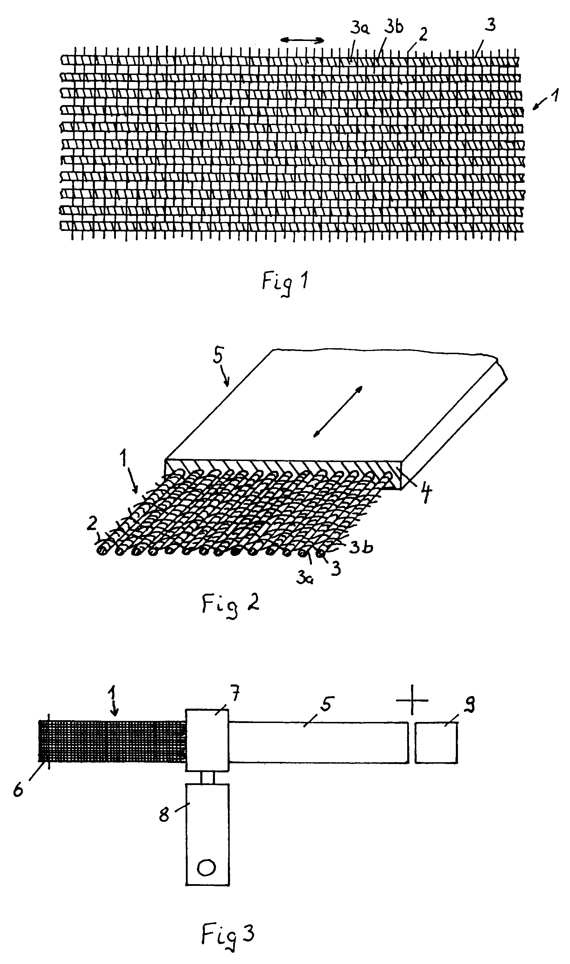

Die Erfindung ist an Hand der in den Figuren 1 bis 6 schematisch dargestellten Ausführungsbeispiele näher erläutert.

Die Figur 1 zeigt eine hatte bzw. ein Gewebe 1, welches aus sich kreuzenden Fäden 2 und 3 aufgebaut ist. Der Faden 3 besteht aus einem Polyethylenstrang 3a, auf den ein Faden 3b aus einem anderen Material wendelartig aufgewickelt ist. Die Fäden 2 und 3b bestehen aus einem nicht reckbaren Material wie z. B. Glas, Baumwolle, Metall etc.. Mit besonderem Vorteil bestehen die Fäden 2 und 3b aus einer Vielzahl von gefachten Glasfäden. Durch die wendelartige Aufwicklung ergibt sich eine Überlänge oder Dehnungsreserve, so daß die Fäden 3 reckbar sind.

Beim Reckprozeß verringert sich der Durchmesser der Kunststoffäden 3a und damit die lichte Weite der wendelartig aufgewickelten Fäden 3b. Im Extremfall verlaufen die Fäden 3b nach dem Reckprozeß parallel, geradlinig nebeneinander. Der Abstand der Fäden 2 vergrößert sich beim Recken um den Reckfaktor. Ein solches Gewebe 1 läßt sich auf einem normalen Webstuhl in großen Längen herstellen.

Ein in der Figur 1 dargestelltes Gewebe läßt sich in einem kontinuierlichen Arbeitsprozeß in einer Kunststoffmatrix einbetten. Ein solches Band zeigt die Figur 2, in welcher die Kunststoffmatrix mit 4 bezeichnet ist.

Für die Herstellung des Bandes 5 wird zunächst der Kunststoffaden 3 durch Extrusion hergestellt, der nach dem Erkalten von einem gefachten Glasfaden 3b mit einer relativ kurzen Schlaglänge umwickelt wird.

### Beispiel:

| | |
|---|---|
| Polyethylenfaden | Durchmesser: 1 mm |
| Glasfaden | Durchmesser: 0,05 mm |
| Schlaglänge des Glasfadens | Durchmesser: 1 mm |

Ein solcher Faden 3 ist maximal um den Faktor ca. 4 reckbar. Der Faden 3 wird als Schußfaden in einem nicht dargestellten Webstuhl mit einer Vielzahl von als Kettfäden einlaufenden gefachten Glasfäden 2 von ca. 0,05 mm Durchmesser zu einem Gewebe verarbeitet.

Wie die Figur 3 zeigt, wird das Gewebe 1 von einem Wickel 6 kontinuierlich abgezogen und in den Querspritzkopf 7 eines Extruders 8 eingefahren und dort in der Kunststoffmatrix 4 eingebettet. Das so hergestellte Band 5 wird dann in Teillängen 9 geschnitten, die wie die Pfeile andeuten, quer zur Extrusionsrichtung reckbar sind.

Als Werkstoff für die Kunststoffmatrix wird eine Mischung aus
50 Teilen Polyethylen
40 Teilen Ethylen-Vinylacetat-Copolymer
und 10 Teilen Ruß
hergestellt und zu Granulat verarbeitet. Das Granulat wird zusammen mit ca. 1 Gew.% Vinylmetoxisilan in den Trichter des Extruders 8 eingefüllt und um das Gewebe 1 zu einem Band mit ca. 4 mm Wanddicke geformt.

Bei einem mehrschichtigen Aufbau des Bandes kann dieses durch Koextrusion von z.B. zwei Schichten hergestellt werden, wobei das Gewebe 1 zwischen diesen Schichten angeordnet wird. Will man untershiedlich hohe Vernetzungsgrade der Schichten erzielen, ist der Anteil an Vinylmetoxysilan zu verringern, z.B. auf 0,2 bis 0,5 Gew.%.

Die abgetrennten Teillängen werden dann bei Anwesenheit von Wasserdampf bei ca. 95 °C vernetzt. Es versteht sich von selbst, daß die Teillängen 9 auch erst nach dem Vernetzen vom Band 5 abgetrennt werden können.

Die vernetzten Teillängen 9, die auch als Rohlinge bezeichnet werden, werden dann in einem nicht dargestellten Reckrahmen auf die ca. 4-fache Länge gereckt. Dieser Reckvorgang wird bei einer Temperatur von ca. 120 - 150 °C durchgeführt, wobei auch der Kunststoffstrang 3a erweicht und durch den Reckprozeß seinen Querschnitt verringert und somit der Veränderung der Form des wendelartig gewickelten Fadens 3b nicht hinderlich ist.

Das gereckte Band hat dann eine Wanddicke von ca. 1 mm. Im gereckten Zustand wird das Band auf Raumtemperatur abgekühlt und ist gebrauchsfertig, d. h. bei Wiedererwärmung hat das Band das Bestreben, in die bei der Extrusion erzeugte Form zurückzuschrumpfen.

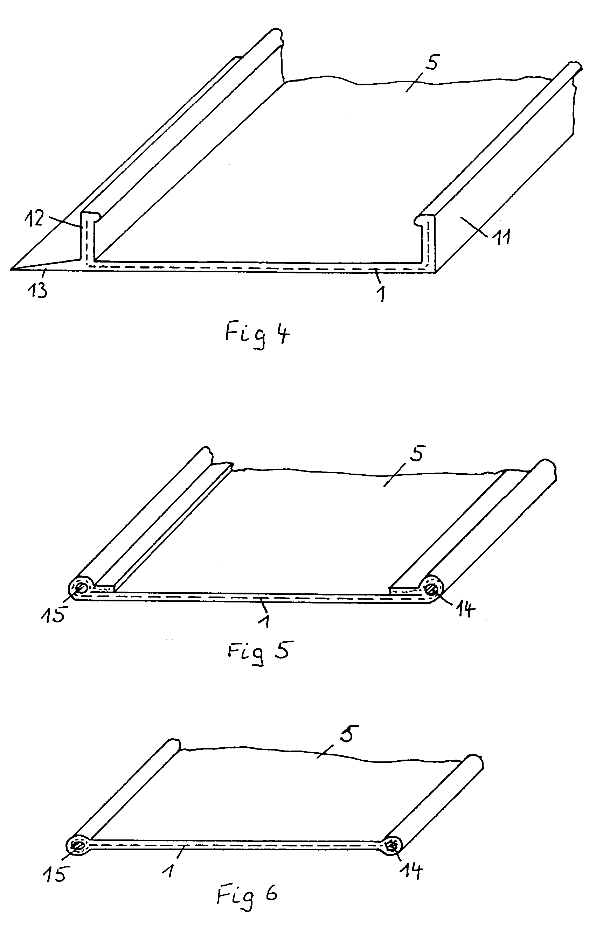

Die Figuren 4 bis 6 zeigen verschiedene Ausführungsformen von gewebeverstärkten Umwickelmuffen bzw. Manschetten.

Nach Figur 4 hat die Umwickelmuffe die Form, wie sie sich für die Einhüllung von Kabelspleißen durchgesetzt hat. Das Band 5 hat an seinen Längskanten zwei Stege 11 und 12 sowie eine über den Bereich des Steges 12 hinausgehende Lasche 13. Nach dem Herumlegen des Bandes um die Spleißverbindung gelangt die Lasche 13 unter den Bereich des Steges 11. Durch Überschieben einer nicht dargestellten Schiene, wie sie aus der DE-PS 15 25 815 bekannt ist, wird das Band 5 in seiner Rohrform gehalten. Zum Zwecke des Abdichtens der Muffe weist das Band 5 an seiner dem Spleiß zugekehrten Oberfläche noch eine nicht näher bezeichnete an sich bekannte Kleberbeschichtung auf. Die in Fig. 4 dargestellte Umwickelmuffe unterscheidet sich von der bekannten Muffe nach der DE-PS 15 25 815 dahingehend, daß innerhalb der Wandung des Bandes 5 das Gewebe 1 angeordnet ist, welches sich bis in den Bereich der Stege 11 und 12 erstreckt. Dieses Gewebe 1 erhöht die Reißfestigkeit und Druckbeständigkeit des Bandes 5 bei Schrumpftemperatur.

Die Figur 5 zeigt ein anderes Beispiel einer Umwickelmuffe. Das Band 5 ist an seinen Längskanten schlaufenartig umgelegt, wobei innerhalb der Schlaufen je ein flexibler Stab 14 und 15 z. B. aus miteinander verseilten oder gefachten Glasfäden angeordnet ist. Diese Stäbe 14 und 15 werden nach dem Formen des Bandes 5 um den Kabelspleiß von der oben beschriebenen Schiene umgriffen. Die Schlaufen sind durch Verkleben und/oder durch Vernähen bzw. Verklammern der einander überlappenden Bereiche gebildet. Das Herumlegen der Bandkanten um die Stäbe 14 und 15 kann unmittelbar nach dem Extrusionsvorgang erfolgen, weil dann eine Verschweißung der noch nicht vernetzten überlappenden Bereiche miteinander möglich ist. Auch hier erstreckt sich das Gewebe 1 bis zu den Längskanten des Bandes 5, d. h. die Randbereiche des Gewebes 1 umschlingen die Stäbe 14 und 15.

Die Figur 6 zeigt eine weitere vorteilhafte Ausgestaltung. Die Stäbe 14 und 15 sind von dem Gewebe 1 umschlungen. Diese Ausführungsform läßt sich in besonders vorteilhafter Weise dadurch herstellen, daß man die Längskanten des Gewebes 1 um die Stäbe 14 und 15 unter Bildung je einer Schlaufe herumlegt, die einander überlappenden Bereiche durch Nähen festlegt und anschließend dieses Gebilde in dem Extruder mit der Kunststoffmatrix umspritzt. Auch hier dienen die durch die Stäbe 14 und 15 gebildeten Verdickungen als Mittel, die von der Verschlußschiene umgriffen werden.

## Patentansprüche

1. Verfahren zur Herstellung eines wärmerückstellbaren Bandes (5) aus Kunststoff, bei dem eine Matte (1) aus in Längs- und Querrichtung des Bandes (5) verlaufenden Strängen (2,3) in einer Schicht (4) aus Kunststoff eingebettet wird, dadurch gekennzeichnet, daß zunächst eine Matte oder ein Gewebe (1) aus sich kreuzenden Strängen (2,3b) aus nicht oder nur geringfügig reckbarem Material geformt wird, wobei zumindest die in einer Richtung verlaufenden Stränge (3b) nach Art einer Wendel geformt sind, daß die Matte oder das Gewebe (1) in einem Kunststoffmaterial (4) eingebettet wird, daß das Kunststoffmaterial (4) nach dem Einbettungsprozeß vernetzt, darauf erwärmt und daß das so hergestellte Band (5) in Richtung der in Form einer Wendel verlaufenden Stränge (3b) im erwärmten Zustand gereckt und im gereckten Zustand abgekühlt wird.

2. Verfahren nach Anspruch 1, dadurch gekennzeichnet, daß jeder der nach Art einer Wendel geformten Stränge (3b) auf einen Kunststoffstrang (3a) wendelartig aufgewickelt wird.

3. Verfahren nach Anspruch 1 oder 2, dadurch gekennzeichnet, daß das Einbetten der Matte oder des Gewebes (1) in dem Kunststoffmaterial (4) durch Extrudieren, Kaschieren oder Laminieren erfolgt.

4. Verfahren nach Anspruch 2 oder 3, dadurch gekennzeichnet, daß der Strang (3b) auf einen nicht vernetzten thermoplastischen Kunststoffstrang (3a) wendelförmig aufgewickelt wird.

5. Verfahren nach einem oder mehreren der Ansprüche 1 bis 4, dadurch gekennzeichnet, daß die Matte bzw. das Gewebe (1) in einem kontinuierlichen Arbeitsgang mit einem silangepfropften Polyethylen durch Extrusion umspritzt wird, daß das silangepfropfte Polyethylen bei Gegenwart von Wasser oder Wasserdampf vernetzt wird, daß das vernetzte Band (1) auf eine Temperatur oberhalb des Kristallitschmelzpunktes des Polyethylens erwärmt, bei dieser Temperatur um mindestens 40 % gereckt und im gereckten Zustand abgekühlt wird.

6. Verfahren nach einem oder mehreren der Ansprüche 1 bis 5, dadurch gekennzeichnet, daß eine nahezu endlose Matte (1) aus Kett- und Schußfäden (2,3) hergestellt wird, wobei die Kettfäden (2) geradlinig verlaufende Fäden aus im wesentlichen nicht reckbarem Material sind und die Schußfäden (3) aus einem thermoplastischen Kunststoffstrang (3a) mit einer wendelförmigen Umwicklung aus einem oder mehreren Fäden (3b) aus im wesentlichen nicht reckbarem Material bestehen, daß die Matte oder das Gewebe (1) kontinuierlich in einem Kunststoffmaterial eingebettet wird, daß das Kunststoffmaterial vernetzt wird, daß Formlinge (9) von dem Band (5) abgetrennt werden und daß die Formlinge (9) erwärmt und in Richtung der Kunststoffstränge (3a) gereckt und im gereckten Zustand abgekühlt werden.

7. Verfahren nach einem oder mehreren der Ansprüche 1 bis 6, dadurch gekennzeichnet, daß als nicht reckbares Material (2,3b) Baumwollfäden, Glasfasern oder Metallfäden verwendet werden.

8. Verfahren nach einem oder mehreren der Ansprüche 1 bis 7, dadurch gekennzeichnet, daß das Band (5) im Querschnitt gesehen unterschiedlich stark vernetzt wird, dergestalt, daß in den dem zu umhüllenden Gegenstand zugekehrten Wandungsbereichen ein höherer Vernetzungsgrad von z.B. 25 - 50 % und in den dem Gegenstand abgekehrten Wandungsbereichen ein geringerer Vernetzungsgrad von z.B. 5 bis 25 % vorliegt.

9. Verfahren nach Anspruch 8, dadurch gekennzeichnet, daß das Band (5) durch Koextrusion von mindestens zwei Schichten hergestellt wird, wobei die Schichten aus unterschiedlich stark gepfropftem Polyethylen bestehen.

10. Verfahren nach einem oder mehreren der Ansprüche 1 bis 9, dadurch gekennzeichnet, daß der oder die umwickelten Kunststoffstränge (3) mit unterschiedlichem Abstand zueinander verwebt werden.

## Claims

1. Process for producing a strip (5) of plastic which can recover its shape under heat, in which a mat (1) comprising strands (2, 3) running in the longitudinal and transverse directions of the strip (5) is embedded in a layer (4) of plastic, characterized in that first of all a mat or a woven fabric (1) of crossing strands (2, 3b) of unstretchable or only slightly stretchable material is shaped, at least the strands (3b) running in one direction being shaped in the manner of a helix, in that the mat or the woven fabric (1) is embedded in a polymer material (4), in that the polymer material (4) is crosslinked after the embedding process, then heated and in that the strip (5) thus produced is stretched in the heated state in the direction of the strands (3b) running in the form of a helix and is cooled in the stretched state.

2. Process according to Claim 1, characterized in that each of the strands (3b) shaped in the manner of a helix is wound helically onto a polymer strand (3a).

3. Process according to Claim 1 or 2, characterized in that the embedding of the mat or of the woven fabric (1) in the polymer material (4) is performed by extruding or laminating.

4. Process according to Claim 2 or 3, characterized in that the strand (3b) is wound helically onto an uncrosslinked thermoplastic polymer strand (3a).

5. Process according to one or more of Claims 1 to 4, characterized in that the mat or the woven fabric (1) is encapsulated in a continuous operation with a silane-grafted polyethylene by extrusion, in that the silane-grafted polyethylene is crosslinked in the presence of water or water vapour, in that the crosslinked strip (1) is heated to a temperature above the crystalline melting point of the polyethylene, is stretched at this temperature by at least 40% and is cooled in the stretched state.

6. Process according to one or more of Claims 1 to 5, characterized in that a virtually endless mat (1) is produced from warp and weft threads (2, 3), the warp threads (2) being straight-running threads of substantially unstretchable material and the weft threads (3) comprising a thermoplastic polymer strand (3a) having a helical wound surround of one or more threads (3b) of substantially unstretchable material, in that the mat or the woven fabric (1) is embedded continuously in a polymer material, in that the polymer material is cross-linked, in that mouldings (9) are detached from the strip (5) and in that the mouldings (9) are heated and stretched in the direction of the polymer strands (3a) and are cooled in the stretched state.

7. Process according to one or more of Claims 1 to 6, characterized in that cotton threads, glass fibres or metallic threads are used as the unstretchable material (2, 3b).

8. Process according to one or more of Claims 1 to 7, characterized in that the strip (5) is crosslinked to different degrees, seen in cross-section, in such a way that there is a higher degree of crosslinking, of for example 25-50%, in the wall regions facing the object to be enveloped and a lower degree of crosslinking, of for example 5 to 25%, in the wall regions facing away from the object.

9. Process according to Claim 8, characterized in that the strip (5) is produced by co-extrusion of at least two layers, the layers consisting of polyethylene grafted to different degrees.

10. Process according to one or more of Claims 1 to 9, characterized in that the wound-around polymer strand or strands (3) is or are woven with different spacing from one another.

## Revendications

1. Procédé de fabrication d'une bande (5) de plastique, rétractable à chaud, dans le cas duquel on enrobe dans une couche (4) de plastique un tapis (1) constitué d'éléments continus (2,3) orientés selon la direction longitudinale et la direction transversale de la bande (5), caractérisé par le fait que l'on forme tout d'abord un tapis ou un tissu (1) constitué de fils (2,3), qui se croisent, d'un matériau non étirable ou seulement faiblement étirable, au moins les fils (3b) orientés selon une direction étant formés à la façon d'une spirale, que l'on enrobe le tapis ou le tissu (1) dans un matériau plastique (4), qu'après le processus d'enrobage on fait réticuler le matériau plastique (4), puis qu'on le chauffe et que l'on étire à l'état réchauffé, la bande (5), ainsi fabriquée, selon la direction des fils (3b) orientés en forme de spirale et qu'on la fait refroidir à l'état étiré.

2. Procédé selon la revendication 1, caractérisé par le fait que l'on enroule sur un boudin de plastique (3a), à la façon d'une spirale, chacun des fils (3b), formés à la façon d'une spirale.

3. Procédé selon la revendication 1 ou 2, caractérisé par le fait que l'enrobage du tapis ou du tissu (1) dans le matériau plastique (4) se fait par extrusion, doublage ou stratification.

4. Procédé selon la revendication 2 ou 3, caractérisé par le fait que l'on enroule le fil (3b), en forme de spirale, sur un boudin de plastique (3a) thermoplastique, non réticulé.

5. Procédé selon l'une ou plusieurs des revendications 1 à 4, caractérisé par le fait que, dans une phase continue de travail, on enrobe le tapis ou le tissu (1), par extrusion, dans un polyéthylène greffé de silane, que l'on fait réticuler le polyéthylène greffé de silane en présence d'eau ou de vapeur d'eau, que l'on amène, en chauffant, la bande réticulée (1) à une température supérieure au point de fusion des cristallites du polyéthylène, qu'on l'étire d'au moins 40% à cette température et qu'on la fait refroidir à l'état étiré.

6. Procédé selon l'une ou plusieurs des revendications 1 à 5, caractérisé par le fait que l'on fabrique un tapis presque sans fin (1) constitué de fils de chaîne et de fils de trame (2,3), les fils de chaîne (2) étant des fils orientés rectilignement et constitués d'un matériau sensiblement non étirable et les fils de trame (3) étant constitués d'un boudin de plastique thermoplastique (3a) avec un enrubannage, en forme de spirale, constitué d'un ou plusieurs fils (3b) de matériau sensiblement non étirable, que l'on enrobe en continu le tapis ou le tissu (1) dans un matériau plastique, que l'on fait réticuler le matériau plastique, que l'on sépare de la bande (5) des tronçons (9) et que l'on réchauffe les tronçons (9), les étire selon la direction des boudins de plastique (3a) et les refroidit à l'état étiré.

7. Procédé selon l'une ou plusieurs des revendications 1 à 6, caractérisé par le fait que comme matériau non étirable (2,3) on emploie des fils de coton, des fibres de verre ou des fils métalliques.

8. Procédé selon l'une ou plusieurs des revendications 1 à 7, caractérisé par le fait que, vu en coupe, on fait réticuler la bande (5) de façon fortement différente de façon à avoir, dans les zones de paroi orientées vers l'objet à envelopper, un taux de réticulation assez élevé de par exemple 25 - 50% et, dans les zones de paroi orientées en sens opposé à l'objet, un taux de réticulation moindre de par exemple 5 à 25%.

9. Procédé selon la revendication 8, caractérisé par le fait que l'on fabrique la bande (5) par coextrusion d'au moins deux couches, les couches étant constituées de polyéthylène greffé de façon fortement différente.

10. Procédé selon l'une ou plusieurs des revendications 1 à 9, caractérisé par le fait que l'on place à une distance différente l'un de l'autre le ou les boudins de plastique (3) enrubannés.
